(19) Europäisches Patentamt
European Patent Office
Office européen des brevets

(11) **EP 4 631 999 A1**

(12) **EUROPEAN PATENT APPLICATION**
published in accordance with Art. 153(4) EPC


(43) Date of publication:
**15.10.2025 Bulletin 2025/42**

(21) Application number: **24753599.0**

(22) Date of filing: **06.02.2024**

(51) International Patent Classification (IPC):
***C08K 5/09*** *(2006.01)* ***C08K 5/092*** *(2006.01)*
***C08L 69/00*** *(2006.01)* ***C08G 64/42*** *(2006.01)*
***C08G 64/34*** *(2006.01)* ***C08G 65/26*** *(2006.01)*

(52) Cooperative Patent Classification (CPC):
**C08G 64/34; C08G 64/42; C08G 65/26; C08K 5/09; C08K 5/092; C08L 69/00**

(86) International application number:
**PCT/KR2024/001728**

(87) International publication number:
**WO 2024/167274 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 KR 20230015651**
**27.06.2023 KR 20230082943**
**27.06.2023 KR 20230082944**



(71) Applicant: **LG CHEM, LTD.**
**Seoul 07336 (KR)**

(72) Inventors:
- **SHIN, Bo Ra**
**Daejeon 34122 (KR)**
- **BANG, So Hee**
**Daejeon 34122 (KR)**
- **AHN, Min Ji**
**Daejeon 34122 (KR)**
- **KIM, Sang Woo**
**Daejeon 34122 (KR)**
- **PARK, Byung Hyun**
**Daejeon 34122 (KR)**
- **LIM, Seo Yeon**
**Daejeon 34122 (KR)**
- **YOON, Hyun Kyung**
**Daejeon 34122 (KR)**
- **KEUM, Young Sub**
**Daejeon 34122 (KR)**

(74) Representative: **Plasseraud IP**
**104 Rue de Richelieu**
**CS92104**
**75080 Paris Cedex 02 (FR)**


(54) **POLYALKYLENE CARBONATE RESIN COMPOSITION AND PREPARATION METHOD THEREFOR**


(57) The present invention relates to a polyalkylene carbonate resin composition having excellent thermal stability and a method for preparing the same, and a polyalkylene carbonate resin composition comprising polyalkylene carbonate and an organic acid, wherein 0.001 parts by weight to less than 0.5 parts by weight of the organic acid is comprised on the basis of 100 parts by weight of the polyalkylene carbonate, and a method for preparing the same.


[FIG. 1]

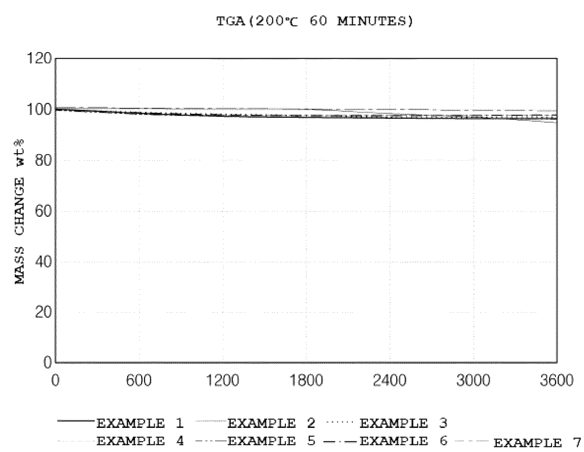


EP 4 631 999 A1

## Description

## TECHNICAL FIELD

[Cross-reference to Related Applications]

The present application claims the benefit of priority based on Korean Patent Application No. 10-2023-0015651, filed on February 06, 2023, and Korean Patent Application Nos. 10-2023-0082943 and 10-2023-0082944, filed on June 27, 2023, the entire contents of which are incorporated herein by reference.

[Technical Field]

The present invention relates to a polyalkylene carbonate resin composition having excellent thermal stability and a method for preparing the same.

## BACKGROUND ART

After industrial revolution, humanity consumes a large amount of fossil fuels to build a modern society but increases the concentration of carbon dioxide in the air by environmental destruction including deforestation. In the way that the increase of the concentration of carbon dioxide becomes a factor of increasing the greenhouse effect, it is important to reduce the concentration in the air of carbon dioxide which has high contribution to global warming, and various studies on the emission regulation and immobilization of carbon dioxide are being conducted.

Recently, a polyalkylene carbonate resin from the polymerization of carbon dioxide and an epoxide is in the spotlight as a biodegradable resin. Particularly, a process for preparing a polyalkylene carbonate resin using carbon dioxide may reduce the global warming problems in terms of immobilizing the carbon dioxide in the air and is also actively studied in terms of using as a carbon source.

However, due to low thermal stability, the polyalkylene carbonate resin thermally decomposes at temperatures above 180°C, which greatly limits industrial application.

In addition, in order to prepare a polyalkylene carbonate resin, a catalyst is surely required as well as carbon dioxide and an epoxide, and as a typical heterogeneous catalyst, a double metal cyanide catalyst composed of a zinc dicarboxylate-based catalyst such as a zinc glutarate catalyst combined with dicarboxylic acid, and a complex of Co, Zn, Al, or the like, is being used.

If the catalyst remains in the resin, the decomposition of a polymer chain is accelerated during the heat treatment of the resin, causing a further deterioration in the thermal stability of the polyalkylene carbonate resin, and accordingly, the development of various purification technologies to remove the catalyst after polymerization is being required.

For example, CN 103842406 B discloses a method for purifying polyalkylene carbonate, wherein polyalkylene carbonate is prepared in the presence of a catalyst in an organic solvent, after removing the organic solvent, polyalkylene granules are formed, an aqueous acid solution containing 0.01-5 wt% of an acid free organic solvent is added thereto, followed by solid-liquid mixing, and heating and drying are performed. However, by the solid-liquid mixing method through the addition of the aqueous acid solution, polyalkylene carbonate is present as a granule (solid)state in the aqueous acid solution, and there are problems in that the deactivation efficiency of the catalyst remaining in the polyalkylene carbonate is low, and an excessive amount of an acid is required.

[Prior Art Document]

(Patent Document)

(Patent Document 1) CN 103842406 B (2016. 11. 02)

## DISCLOSURE OF THE INVENTION

## TECHNICAL PROBLEM

The object of the present invention is to provide a polyalkylene carbonate resin composition having excellent thermal stability.

In addition, the object of the present invention is to provide a method for preparing the polyalkylene carbonate resin composition.

## TECHNICAL SOLUTION

In order to solve the above-described tasks, the present invention provides a polyalkylene carbonate resin composition and a method for preparing the same.

(1) The present invention provides a polyalkylene carbonate resin composition comprising: 100 parts by weight of polyalkylene carbonate; and 0.001 parts by weight to less than 0.5 parts by weight of an organic acid.
(2) The present invention provides the polyalkylene carbonate resin composition according to (1), wherein 0.05 parts by weight to 0.1 parts by weight of the organic acid is comprised.
(3) The present invention provides the polyalkylene carbonate resin composition according to (1) or (2), wherein a metal element derived from a double metal cyanide compound is further comprised, and a weight ratio of the organic acid to the metal element (organic acid/metal element) is 0.05 to 23.00.
(4) The present invention provides the polyalkylene carbonate resin composition according to any one of (1) to (3), wherein a weight ratio of the organic acid to the metal element (organic acid/metal element) is 0.05 to 14.00.
(5) The present invention provides the polyalkylene carbonate resin composition according to any one of (1) to (4), wherein the organic acid is at least one selected from citric acid, tartaric acid, ascorbic acid and maleic acid.
(6) The present invention provides the polyalkylene carbonate resin composition according to any one of (3) to (5), wherein the double metal cyanide compound comprises a component derived from a metal cyanide complex and a component derived from a metal salt, the metal cyanide complex is represented by Formula 1 below, and the metal salt is represented by Formula 2 below.

[Formula 1] $YaM'(CN)_b$

In Formula 1,

M' is at least one selected from the group consisting of Fe(II), Fe(III), Co(II), Co(III), Cr(II), Cr(III), Mn(II), Mn(III), Ir(III), Ni(II), Rh(III), Ru(II), V(V) and V(IV),
Y is an alkali metal ion, or an alkaline earth metal ion,
a is an integer of 1 to 4, b is an integer of 4 to 6, and a and b values are selected so that the metal cyanide complex becomes electrically neutral,

[Formula 2] $M(X)_n$

in Formula 2,
M is at least one selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) and Cr(III),
X is one selected from the group consisting of a halide, a hydroxide, a sulfate, a carbonate, a cyanate, an oxalate, a thiocyanate, an isocyanate, an isothiocyanate, a carboxylate and a nitrate, and
n is a number satisfying the valence of M.

(7) The present invention provides the polyalkylene carbonate resin composition according to (6), wherein the metal cyanide complex is potassium hexacyanocobaltate (III), potassium hexacyanoferrate(II), potassium hexacyanoferrate(III), calcium hexacyanocobaltate(III) or lithium hexacyanoiridate(III).
(8) The present invention provides the polyalkylene carbonate resin composition according to (6), wherein the metal salt is at least one selected from the group consisting of zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II) thiocyanate, nickel(II) formate, and nickel(II) nitrate.
(9) The present invention provides the polyalkylene carbonate resin composition according to any one of (1) to (8), wherein a mass change ratio defined by Mathematical Equation 1 below is 10% or less.

[Mathematical Equation 1]

$$\text{Mass change ratio (\%)} = (|W_1 - W_2| / W_1) \times 100$$

In Mathematical Equation 1,
$W_1$ is a mass of the polyalkylene carbonate resin composition at a point of 0 minutes in a 200°C isothermal step for 60 minutes in a mass change analysis using a thermogravimetric analyzer, and $W_2$ is a mass of the polyalkylene carbonate resin composition at a point of 60 minutes in the 200°C isothermal step for 60 minutes.

(10) The present invention provides the polyalkylene carbonate resin composition according to any one of (1) to (9), wherein a molecular weight change ratio defined by Mathematical Equation 2 below is 55% or less.

$$\text{Molecular weight change ratio (\%)} = (|Mw_1 - Mw_2|/Mw_1) \times 100 \quad \text{[Mathematical Equation 2]}$$

In Mathematical Equation 2,
$Mw_1$ is a weight average molecular weight of the polyalkylene carbonate resin composition measured by gel chromatography before heat treatment, and $Mw_2$ is a weight average molecular weight of the polyalkylene carbonate resin composition measured by gel chromatography after heat treatment at 180°C for 20 minutes.
(11) The present invention provides the polyalkylene carbonate resin composition according to any one of (1) to (10), wherein the polyalkylene carbonate comprises a repeating unit represented by Formula 3 below and a repeating unit represented by Formula 4 below.

[Formula 3]

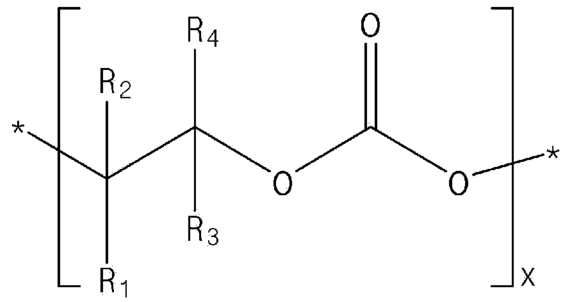

[Formula 4]

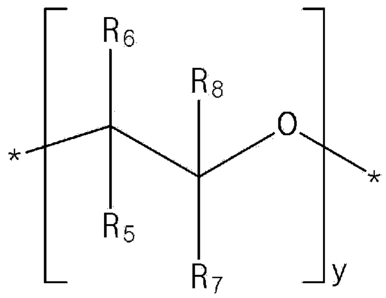

In Formula 3 and Formula 4,

$R_1$ to $R_8$ are each independently hydrogen, a linear alkyl group of 1 to 20 carbon atoms, a branched alkyl group of 3 to 20 carbon atoms, an aryl group of 6 to 20 carbon atoms, an alkenyl group of 2 to 20 carbon atoms, or a cycloalkyl group of 3 to 20 carbon atoms,
* means a connecting part between repeating units, and
x and y are mole fractions, where x is 0.70 to 1.00, y is 0.00 to 0.30, and x+y is 1.

(12) The present invention provides the polyalkylene carbonate resin composition according to any one of (1) to (11), wherein the polyalkylene carbonate has a glass transition temperature of -10°C to 50°C.
(13) The present invention provides the polyalkylene carbonate resin composition according to any one of (1) to (12), wherein the polyalkylene carbonate is at least one selected from the group consisting of polyethylene carbonate, polypropylene carbonate, polypentene carbonate, polyhexene carbonate, polyoctene carbonate and polycyclohexene carbonate.
(14) The present invention provides the polyalkylene carbonate resin composition according to any one of (1) to (13), wherein the polyalkylene carbonate has the cyclic carbonate content of 0.5 wt% to 15 wt%.

(15) The present invention provides a method for preparing a polyalkylene carbonate resin composition, the method comprising: a step of polymerizing an alkylene oxide compound and carbon dioxide in the presence of a catalyst in a solvent to prepare a polymer comprising polyalkylene carbonate; a step of adding an organic acid to the polymer and stirring; and a step of removing the solvent, wherein 0.001 parts by weight to less than 0.5 parts by weight of the organic acid is added on the basis of 100 parts by weight of the solid content of the polyalkylene carbonate in the polymer.
(16) The present invention provides the method for preparing a polyalkylene carbonate resin composition according to (15), wherein the catalyst comprises a double metal cyanide compound and a complexing agent.
(17) The present invention provides the method for preparing a polyalkylene carbonate resin composition according to (15) or (16), wherein a solvent is additionally added to the polymer so that the solid content of the polyalkylene carbonate in the polymer before adding the organic acid becomes 10 wt% to 40 wt%.
(18) The present invention provides the method for preparing a polyalkylene carbonate resin composition according to any one of (15) to (17), wherein the polymerization is performed in a temperature range of 30°C to 120°C.
(19) The present invention provides the method for preparing a polyalkylene carbonate resin composition according to any one of (15) to (18), wherein the complexing agent is at least one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-mehtyl cycloheptanol and 4-methy cycloheptanol.

## ADVANTAGEOUS EFFECTS

The polyalkylene carbonate resin composition according to the present invention comprises 0.001 parts by weight to less than 0.5 parts by weight of an organic acid on the basis of 100 parts by weight of polyalkylene carbonate and may deactivate the activity of a catalyst remaining in the resin composition by the organic acid, thereby obtaining improving effect of thermal stability.
In addition, the polyalkylene carbonate resin composition according to the present invention includes an organic acid, and the organic acid is present in a specific weight ratio with respect to a remaining catalyst component, and accordingly, the activity of a catalyst remaining in the resin composition may be further deactivated and show further improved effect of thermal stability.

## BRIEF DESCRIPTION OF DRAWINGS

The drawings attached to the description illustrate specific embodiments of the present invention, and serve to the further understanding of the technical idea of the present invention together with the above-described contents of the invention. Therefore, the present invention should not be interpreted as limited to the matters described in the drawings.

FIG. 1 is a graph on the mass change analysis results of polyethylene carbonate resin compositions prepared in Example 1 to Example 7 via a thermogravimetric analyzer.
FIG. 2 is a graph on the mass change analysis results of polyethylene carbonate resin compositions prepared in Example 1 and Comparative Example 1 to Comparative Example 5 via a thermogravimetric analyzer.

## BEST MODE FOR CARRYING OUT THE INVENTION

Hereinafter, the present invention will be explained in more detail to assist the understanding of the present invention.
It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

Definition of Terms

The term "alkyl group" in the description may mean monovalent aliphatic saturated hydrocarbon.

The term "aryl group" in the description may mean cyclic aromatic hydrocarbon, and may include both monocyclic aromatic hydrocarbon in which one cycle is formed, and polycyclic aromatic hydrocarbon in which two or more cycles are combined.

The term "alkenyl group" in the description may mean monovalent aliphatic unsaturated hydrocarbon containing one or two or more double bonds.

The term "cycloalkyl group" in the description may include both cyclic saturated hydrocarbon, and cyclic unsaturated hydrocarbon including one or two or more unsaturated bonds.

Measurement Methods

In the description, molecular weight properties were analyzed by gel permeation chromatography using polystyrene as a standard material, particularly, measured using GPC (Waters 1515 isocratic HPLC pump, Waters 2414 refractive index detector, Waters Co.) under the conditions below.

Column: two columns of Agilent PLgel MIXED-B (7.5 mm x 300, 10 μm)
Solvent: chloroform
Flow rate: 0.7 ml/min
Column temperature: 40°C
Sample: 4.0 mg/1.0 ml chloroform
Sample injection amount: 20 μl
Standard material: polystyrene

In the description, mass change analysis was conducted using a thermogravimetric analyzer (TGA), particularly, using TGA (TGA2, Mettler Toledo) under the conditions below.

1) First step: temperature increase from 30°C to 50°C (10°C/min)
2) Second step: isothermal at 150°C for 5 minutes
3) Third step: temperature increase from 150°C to 200°C (10°C/min)
4) Fourth step: isothermal at 200°C for 60 minutes

Polyalkylene Carbonate Resin Composition

The present invention provides a polyalkylene carbonate resin composition with improved thermal stability by suppressing thermal decomposition.

The polyalkylene carbonate resin composition according to an embodiment of the present invention is characterized by including: 100 parts by weight of polyalkylene carbonate; and 0.001 parts by weight to less than 0.5 parts by weight of an organic acid.

In addition, the polyalkylene carbonate resin composition according to an embodiment of the present invention is characterized by including: polyalkylene carbonate; an organic acid; and a metal element derived from a double metal cyanide compound, wherein a weight ratio of the organic acid to the metal element (organic acid/metal element) is 0.05 to 23.00.

Particularly, the polyalkylene carbonate resin composition according to an embodiment of the present invention may have the weight ratio of the organic acid to the metal element (organic acid/metal element) of 0.05 to 14.00, 0.05 to 5.00 or 0.05 to 1.00.

A polyalkylene carbonate resin is prepared utilizing carbon dioxide as a raw material and is receiving great attention as a biodegradable resin, but due to its low thermal stability, it is thermally decomposed at temperatures above 180°C, which greatly limits its industrial application. In addition, in order to prepare the polyalkylene carbonate resin, a catalyst is essential as well as carbon dioxide and an epoxide. If the catalyst remains in the resin, the decomposition of a polymer chain is accelerated during the heat treatment of the resin, which causes the deterioration of the thermal stability of the polyalkylene carbonate resin, and thus, the development of various purification technologies to remove the catalyst after completing polymerization are required.

However, the polyalkylene carbonate resin composition according to an embodiment of the present invention includes a certain amount of an organic acid by directly adding a specific amount of the organic acid to a polymer after polymerizing polyalkylene carbonate, and a remaining catalyst may be deactivated without additional processes such as extraction and precipitation, and thus, the thermal decomposition thereof may be suppressed, and the thermal stability

thereof may become excellent.

Hereinafter, the polyalkylene carbonate resin composition according to the present invention will be explained in particular by dividing it into each component contained therein.

*Polyalkylene Carbonate*

In the present invention, the polyalkylene carbonate is a polymer prepared by polymerizing an alkylene oxide compound and carbon dioxide, and may include a repeating unit represented by Formula 3 and a repeating unit represented by Formula 4.

[Formula 3]

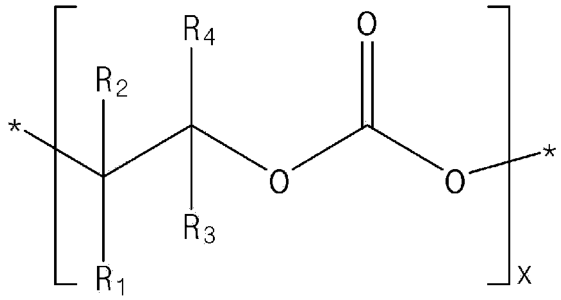

[Formula 4]

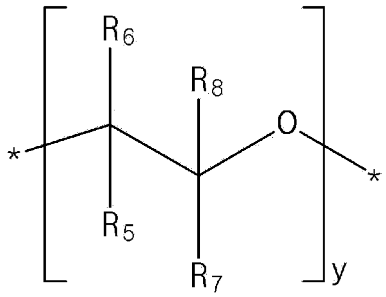

In Formula 3 and Formula 4,

$R_1$ to $R_8$ are each independently hydrogen, a linear alkyl group of 1 to 20 carbon atoms, a branched alkyl group of 3 to 20 carbon atoms, an aryl group of 6 to 20 carbon atoms, an alkenyl group of 2 to 20 carbon atoms, or a cycloalkyl group of 3 to 20 carbon atoms, * means a connecting part between repeating units, x and y are mole fractions, where x is 0.70 to 1.00, y is 0.00 to 0.30, and x+y is 1.

In addition, x may be 0.80 to 1.00, and y may be 0.00 to 0.20, preferably, x may be 0.90 to 1.00, and y may be 0.00 to 0.10. If the above-described ranges are satisfied, the fixation ratio of carbon dioxide is high, which is effective in reducing greenhouse gases and is advantageous for biodegradation characteristics. In addition, if the polyalkylene carbonate according to the present invention is manufactured into a film, the film exhibits low oxygen permeability, resulting in excellent barrier properties.

The polyalkylene carbonate may be at least one selected from the group consisting of polyethylene carbonate, polypropylene carbonate, polypentene carbonate, polyhexene carbonate, polyoctene carbonate and polycyclohexene carbonate. In addition, in Formula 1, $R_1$ to $R_8$ are each independently hydrogen, a linear alkyl group of 1 to 20 carbon atoms, a branched alkyl group of 3 to 20 carbon atoms, an aryl group of 6 to 20 carbon atoms, an alkenyl group of 2 to 20 carbon atoms, or a cycloalkyl group of 3 to 20 carbon atoms, and may be selected as a suitable functional group considering the physical properties of the resin to be finally obtained.

In addition, the repeating unit represented by Formula 3 may be one represented by Formula 5 below.

[Formula 5]

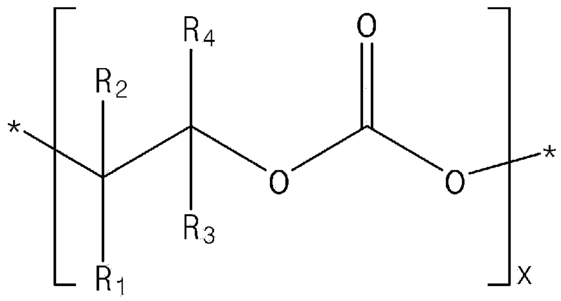

In Formula 5, $R_1$ to $R_4$ are each independently hydrogen or a linear alkyl group of 1 to 10 carbon atoms, and x and * are the same as defined in Formula 3.

More particularly, the repeating unit represented by Formula 3 may be one represented by Formula 6 or Formula 7 below.

[Formula 6]

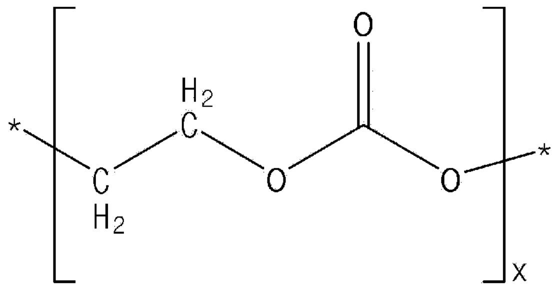

[Formula 7]

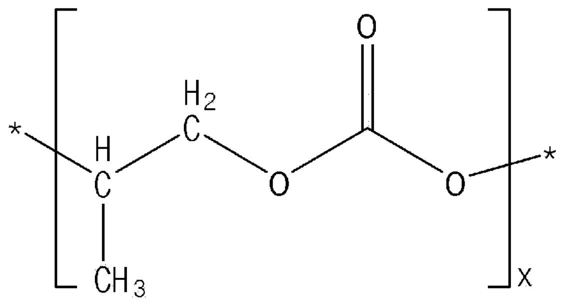

In Formulas 6 and 7, x and * are the same as defined in Formula 1.

In addition, the repeating unit represented by Formula 4 may be one represented by Formula 8 below.

[Formula 8]

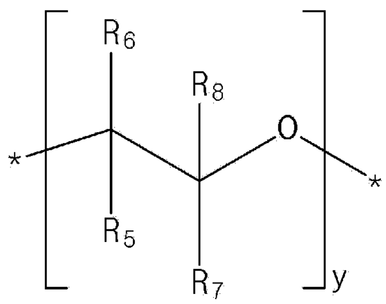

In Formula 8, $R_5$ to $R_8$ are each independently hydrogen or a linear alkyl group of 1 to 10 carbon atoms, and y and * are the same as defined in Formula 4.

More particularly, the repeating unit represented by Formula 4 may be one represented by Formula 9 or Formula 10 below.

[Formula 9]

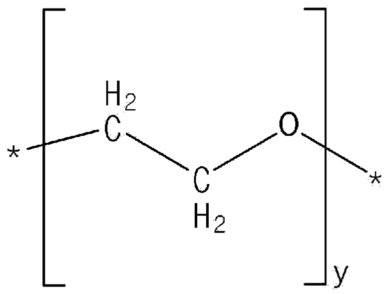

[Formula 10]

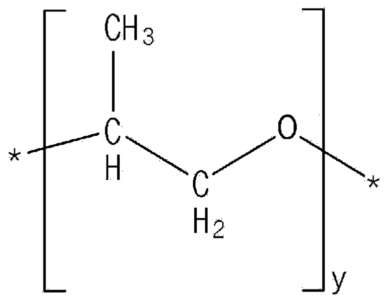

In Formulas 9 and 10, y and * are the same as defined in Formula 2.

The polyalkylene carbonate of the present invention has a glass transition temperature (Tg) of -10°C to 50°C, 0°C to 50°C or 10°C to 50°C. If the above-described range is satisfied, the processability of the polyalkylene carbonate at room temperature may be excellent.

In another embodiment, in Formula 3 and Formula 4, if $R_1$ to $R_8$ are each independently hydrogen, the polyalkylene carbonate may have a glass transition temperature (Tg) of 0°C to 20°C.

In another embodiment, in Formula 3 and Formula 4, if $R_1$ to $R_8$ are each independently a linear alkyl group of 1 to 20 carbon atoms, a branched alkyl group of 3 to 20 carbon atoms, an aryl group of 6 to 20 carbona toms, an alkenyl group of 2 to 20 carbona toms or a cycloalkyl group of 3 to 20 carbon atoms, the polyalkylene carbonate may have a glass transition temperature (Tg) of 30°C to 50°C or 35°C to 50°C.

In addition, the cyclic carbonate content may be 0.5 wt% to 15.0 wt%, 0.5 wt% to 10.0 wt%, or 0.5 wt% to 5.0 wt% on the basis of the total weight of the polyalkylene carbonate. If the above-described range is satisfied, defects of degrading the glass transition temperature due to the cyclic carbonate that acts as a softening agent, may be minimized, and effects of excellent mechanical properties may be obtained.

The cyclic carbonate content may be measured by dissolving 10 mg of a polyalkylene carbonate resin sample in a chloroform-d6 solvent using a $^1$H-NMR spectrometer (500 MHz Spectrometer, Jeol Co.). Particularly, from the results measured by the $^1$H-NMR spectrometer, it was confirmed that a peak is shown around 4.5 ppm that is a cyclic carbonate peak, and the cyclic carbonate content can be calculated using the values of the peak area of carbonate and the peak area of an ether as in Mathematical Equation 3 below.

[Mathematical Equation 3]

$$\frac{(A/N)}{(A/N)+[(B+C)/(1-CO_2\ content)]}$$

In Mathematical Equation 3, A, B, C, N and the $CO_2$ content may be defined as follows.

A = cyclic carbonate peak area, B = carbonate peak area, C = ether peak area, N = [alkylene oxide molar mass/(44 + alkylene oxide molar mass)], $CO_2$ content = (mole fraction of carbonate unit x 44)/[(mole fraction of carbonate unit x 44) + (alkylene oxide molar mass x 100)]

*Organic Acid*

In an embodiment of the present invention, the organic acid plays the role of deactivating a catalyst and may be included in the polyalkylene carbonate resin composition in 0.001 parts by weight to less than 0.5 parts by weight on the basis of 100 parts by weight of the polyalkylene carbonate.

Particularly, the polyalkylene carbonate resin composition may include 0.05 parts by weight to 0.1 parts by weight of the organic acid.

If the organic acid is included within the above range, the catalyst may be effectively deactivated without inducing the problem of accelerating the thermal decomposition of the polyalkylene carbonate, and the thermal stability of the composition may be effectively improved.

Meanwhile, the polyalkylene carbonate resin composition according to an embodiment of the present invention may be prepared by a preparation method in which a step of removing the organic acid is not performed after adding the organic acid, which will be explained later, and the organic acid content in the polyalkylene carbonate resin composition may be the same as the addition amount during the preparation.

In another embodiment, in the present invention, the organic acid content in the polyalkylene carbonate resin composition may be confirmed through a component quantitative analysis method commonly well known in the art, for example, quantitative analyzers such as UPLC/MS/MS, HPLC/RI, and UPLC-QTOF/MS may be used.

In addition, regarding the organic acid content, there is no difference between the amount added during preparation and the content analyzed using a quantitative analyzer, or within the error range (±10%).

In addition, the organic acid may be at least one selected from citric acid, tartaric acid, ascorbic acid and maleic acid.

*Metal Component*

In an embodiment of the present invention, the metal component may be the residue of the catalyst used during preparing the polyalkylene carbonate resin composition, i.e., a residual catalyst component.

Particularly, the metal component is a metal component derived from a double metal cyanide compound, and the double metal cyanide compound includes a component derived from a metal cyanide complex and a component derived from a metal salt.

More particularly, the double metal cyanide compound may be derived from a complex and a metal salt, and the metal cyanide complex may be water-soluble and represented by Formula 1 below.

[Formula 1] $Y_aM'(CN)_b$

In Formula 1, M' may be at least one selected from the group consisting of Fe(II), Fe(III), Co(II), Co(III), Cr(II), Cr(III), Mn(II), Mn(III), Ir(III), Ni(II), Rh(III), Ru(II), V(V) and V(IV), particularly, at least one selected from the group consisting of Co(II), Co(III), Fe(II), Fe(III), Cr(III), Ir(III) and Ni(II), more particularly, Co(II) or Co(III). In addition, Y is an alkali metal ion, or an alkaline earth metal ion. a is an integer of 1 to 4, b is an integer of 4 to 6, and a and b values are selected so that the metal cyanide complex is electrically neutral.

In another embodiment, the metal cyanide complex may be potassium hexacyanocobaltate(III), potassium hexacyanoferrate(II), potassium hexacyanoferrate(III), calcium hexacyanocobaltate(III) or lithium hexacyanoiridate(III), preferably, potassium hexacyanocobaltate(III).

The metal salt may be water soluble and represented by Formula 2 below.

[Formula 2] $M(X)_n$

In Formula 2, M is a transition metal, preferably, at least one selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) and Cr(III), particularly, at least one selected from the group consisting of Zn(II), Fe(II), Co(II) and Ni(II). X is one selected from the group consisting of a halide, a hydroxide, a sulfate, a carbonate, a cyanate, an oxalate, a thiocyanate, an isocyanate an isothiocyanate, a carboxylate and a nitrate, and the value of n is a number satisfying the valence of M.

In another embodiment, the metal salt may be zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II)

thiocyanate, nickel(II) formate, nickel(II) nitrate, and mixtures thereof, preferably, zinc(II) chloride, zinc(III) chloride, zinc bromide or zinc iodide.

*Polyalkylene Carbonate Resin Composition*

The polyalkylene carbonate resin composition according to an embodiment of the present invention may have a mass change ratio defined by Mathematical Equation 1 below of 10% or less.

[Mathematical Equation 1]

$$\text{Mass change ratio (\%)} = (|W_1 - W_2| / W_1) \times 100$$

In Mathematical Equation 1, $W_1$ is the mass of the polyalkylene carbonate resin composition at a point of 0 minutes in a 200°C isothermal step for 60 minutes in mass change analysis using a thermogravimetric analyzer, and $W_2$ is the mass of the polyalkylene carbonate resin composition at a point of 60 minutes in the 200°C isothermal step for 60 minutes.

In another embodiment, the polyalkylene carbonate resin composition may have a molecular weight change ratio defined by Mathematical Equation 2 below of 55% or less.

$$\text{Molecular weight change ratio (\%)} = (|Mw_1 - Mw_2| / Mw_1) \times 100 \qquad \text{[Mathematical Equation 2]}$$

In Mathematical Equation 2, $Mw_1$ is the weight average molecular weight of the polyalkylene carbonate resin composition measured by gel chromatography before heat treatment, and $Mw_2$ is the weight average molecular weight of the polyalkylene carbonate resin composition measured by gel chromatography after heat treatment at 180°C for 20 minutes.

Method for Preparing Polyalkylene Carbonate Resin Composition

The present invention provides a method for preparing the polyalkylene carbonate resin composition.

The method for preparing the polyalkylene carbonate resin composition according to an embodiment of the present invention is characterized by including: a step of polymerizing an alkylene oxide compound and carbon dioxide in the presence of a catalyst in an solvent to prepare a polymer containing polyalkylene carbonate (S1); a step of adding an organic acid to the polymer and stirring (S2); and a step of removing the solvent (S3), wherein 0.001 parts by weight to less than 0.5 parts by weight of the organic acid is added on the bases of 100 parts b weight of the solid content of the polyalkylene carbonate in the polymer. Here, the preparation method of an embodiment of the present invention does not include additional processes for removing the catalyst, such as extraction and precipitation after the polymerization, and the polymer includes the catalyst.

Hereinafter, the method is divided into each step and explained in more detail.

*Step (S1)*

Step (S1) is a step for forming polyalkylene carbonate and preparing a polymer containing the same, and may be performed by polymerizing an alkylene oxide compound and carbon dioxide in the presence of a catalyst in a solvent.

The catalyst includes a double metal cyanide compound and a complexing agent, and the double metal cyanide compound and the complexing agent may use commonly used ones in the art without limitation.

For example, the double metal cyanide compound may be derived from a metal cyanide complex and a metal salt, and the metal cyanide complex may show water soluble properties.

Particular double metal cyanide compounds are as described above.

The catalyst according to the present invention may be represented by Formula 11 below.

[Formula 11] $M^2_p[M^1(CN)_6]_q \cdot dM^2(X)_r \cdot eL \cdot fH_2O$

In Formula 11, $M^1$ and $M^2$ are each independently a transition metal, X is an anion, and L is cyclobutanol, cyclopentanol, cyclohexanol, cycloheptanol, or cyclooctanol. p, q, d, r, e and f are each independently an integer of 1 to 6.

More particularly, the catalyst according to the present invention may be represented by Formula 12 below.

[Formula 12] $Zn_3[Co(CN)_6]_2 \cdot gZnCl_2 \cdot hL \cdot iH_2O$

In Formula 12, L is cyclobutanol, cyclopentanol, cyclohexanol, cycloheptanol, or cyclooctanol, and g, h and i are each independently an integer of 1 to 6.

In addition, the complexing agent may use commonly used ones in the art, without specific limitation, and for example, at least one selected from the group consisting of ethanol, isopropanol, n-butanol, iso-butanol, sec-butanol and tert-butanol.

In another embodiment, the complexing agent may be a compound represented by Formula 13 below.

[Formula 13]

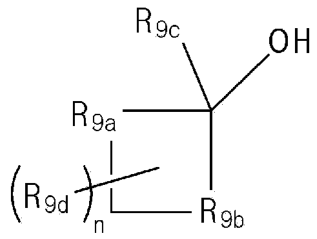

In Formula 13,

$R_{9a}$ and $R_{9b}$ are each independently a single bond or an alkylene group of 1 to 5 carbon atoms, where at least one among $R_{9a}$ and $R_{9b}$ is an alkylene group of 1 to 5 carbon atoms,
$R_{9c}$ and $R_{9d}$ are each independently a hydrogen atom or an alkyl group of 1 to 6 carbon atoms, and
n is an integer of 0 to 2.

Particularly, in Formula 13, $R_{9a}$ and $R_{9b}$ may be each independently a single bond or an alkylene group of 1 to 3 carbon atoms, where at least one among $R_{9a}$ and $R_{9b}$ is an alkylene group of 1 to 3 carbon atoms, $R_{9c}$ and $R_{9d}$ are each independently a hydrogen atom or an alkyl group of 1 to 4 carbon atoms, and n may be an integer of 0 to 2.

In another embodiment, in Formula 9, $R_{9a}$ and $R_{9b}$ may be each independently a single bond or an alkylene group of 1 to 3 carbon atoms, at least one among $R_{9a}$ and $R_{9b}$ may be an alkylene group of 1 to 3 carbon atoms, $R_{9c}$ may be a hydrogen atom, and n may be 0.

In another embodiment, the complexing agent may be a cycloalkyl alcohol of 3 to 12 carbon atoms, particularly, a cycloalkyl alcohol of 4 to 10 carbon atoms, or 5 to 7 carbon atoms.

More particularly, the complexing agent may be at least one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-mehtyl cycloheptanol and 4-methy cycloheptanol. Particularly, the complexing agent may be at least one selected from the group consisting of cyclobutanol, cyclopentanol, cyclohexanol, cycloheptanol and cyclooctanol.

In another embodiment, the complexing agent may be at least one selected from the group consisting of cyclobutanol, cyclopentanol, cyclohexanol, cycloheptanol and cyclooctanol.

Meanwhile, if the compound represented by Formula 13 is included as the complexing agent in the catalyst, a cycloalkane-type alcohol having a bulky structure is used as the complexing agent, and the crystal structure of the catalyst may be diverse including cubic, amorphous and monoclinic, and accordingly, the ratio of a repeating unit containing carbon dioxide in the polyalkylene carbonate prepared increases by suitably controlling the reaction rate of an epoxide compound and carbon dioxide, the content of a cyclic carbonate by product decreases, and polyalkylene carbonate having further excellent thermal stability and excellent processability may be obtained.

In addition, the catalyst may further include an auxiliary complexing agent as necessary, and the auxiliary complexing agent may be a compound having a hydroxyl group, an amine group, an ester group, or an ether group at a

terminal.

The auxiliary complexing agent may improve the activity of the catalyst, and may be, for example, at least one selected from the group consisting of polyacrylamide, poly(acrylamide-co-acrylic acid), polyacrylic acid, poly(acrylic acid-co-maleic acid), polyacrylonitrile, polyalkyl acrylate, polyalkyl methacrylate, polyvinyl methyl ether, polyvinyl ethyl ether, polyvinyl acetate, polyvinyl alcohol, poly-N-vinylpyrrolidone, poly(N-vinylpyrrolidone-co-acrylic acid), polyvinyl methyl ketone, poly(4-vinylphenol), poly(acrylic acid-co-styrene), an oxazoline polymer, polyalkyleneimine, maleic acid, a maleic anhydride copolymer, hydroxyethyl cellulose, polyacetal, glycidyl ether, glycoside, carboxylic ester of polyhydric alcohols, gallic acid, ester and amide.

In addition, the auxiliary complexing agent may be a compound prepared by the ring-opening polymerization of a cyclic ether compound, an epoxy polymer or an oxetane polymer, for example, at least one selected from the group consisting of polyether, polyester, polycarbonate, polyalkylene glycol, polyalkylene glycol sorbitan ester, and polyalkylene glycol glycidyl ether.

In addition, the polymerization is not specifically limited, but preferably, a solution polymerization may be performed. By the solution polymerization, the heat of reaction may be suitably controlled, and the weight average molecular weight or viscosity of the target polyalkylene carbonate may be easily controlled.

The catalyst and the alkylene oxide compound may be used in a weight ratio of 1:100 to 1:8000, 1:300 to 1:6000, or 1:1000 to 1:4000. Within the above-described range, effects of minimizing by-products while showing high catalyst activity, and minimizing back-biting phenomena of the polyalkylene carbonate prepared due to heat, may be achieved.

In addition, the polymerization of the alkylene oxide compound and carbon dioxide may be performed in a temperature range of 30°C to 120°C, 40°C to 110°C or 50°C to 100°C. If the above-described range is satisfied, the polymerization time of the alkylene oxide compound and carbon dioxide may be managed within 24 hours, thereby improving preparation productivity.

In addition, the polymerization of the alkylene oxide compound and carbon dioxide may be performed in a pressure range of 5 bar to 50 bar, 10 bar to 40 bar, or 15 bar to 30 bar. If the above-described range is satisfied, the ratio of a repeating unit including carbon dioxide in the polyalkylene carbonate prepared may be high, and reduction effect of the cyclic carbonate by-product content may be achieved.

The alkylene oxide compound may use at least one compound selected from the group consisting of alkylene oxide of 2 to 20 carbon atoms, unsubstituted or substituted with halogen or an alkyl group of 1 to 5 carbon atoms; cycloalkylene oxide of 4 to 20 carbon atoms, unsubstituted or substituted with halogen or an alkyl group of 1 to 5 carbon atoms; and styrene oxide of 8 to 20 carbon atoms, unsubstituted or substituted with halogen or an alkyl group of 1 to 5 carbon atoms, for example, at least one compound selected from the group consisting of ethylene oxide, propylene oxide, butene oxide, pentene oxide, hexene oxide, octene oxide, decene oxide, dodecene oxide, tetradecene oxide, hexadecene oxide, octadecene oxide, butadiene monoxide, 1,2-epoxy-7-octene, epifluorohydrin, epichlorohydrin, epibromohydrin, isopropyl glycidyl ether, butyl glycidyl ether, t-butyl glycidyl ether, 2-ethylhexyl glycidyl ether, allyl glycidyl ether, cyclopentene oxide, cyclohexene oxide, cyclooctene oxide, cyclododecene oxide, alpha-pinene oxide, 2,3-epoxynorbornene, limonene oxide, dieldrin, 2,3-epoxypropylbenzene, styrene oxide, phenylpropylene oxide, stilbene oxide, chlorostilbene oxide, dichlorostilbene oxide, 1,2-epoxy-3-phenoxypropane, benzyloxymethyl oxirane, glycidyl-methylphenyl ether, chlorophenyl-2,3-epoxypropyl ether, epoxypropyl methoxyphenyl ether, biphenyl glycidyl ether and glycidyl naphthyl ether.

In addition, in the case of performing solution polymerization of the alkylene oxide compound and carbon dioxide, the alkylene oxide compound and a solvent may be miscible, and as the solvent, at least one selected from the group consisting of methylene chloride, ethylene dichloride, trichloroethane, tetrachloroethane, chloroform, acetonitrile, propionitrile, dimethylformamide, N-methyl-2-pyrrolidone, dimethylsulfoxide, nitromethane, 1,3-dioxalan (dioxolane), 1,4-dioxane, hexane, toluene, tetrahydrofuran, methyl ethyl ketone, methyl amine ketone, methyl isobutyl ketone, acetone, cyclohexanone, trichloroethylene, methyl acetate, vinyl acetate, ethyl acetate, propyl acetate, butyrolactone, caprolactone, nitropropane, benzene, styrene, xylene, and methyl propasol, may be used.

The solvent and the alkylene oxide compound may be used in a weight ratio of 1:0.1 to 1:100, 1:1 to 1:100 or 1:1 to 1:10. Within this range, the solvent may suitably act as a reaction medium, and accordingly, the productivity of the polyalkylene carbonate resin may be improved, and effects of minimizing by-products produced during a preparation process may be achieved.

*Step (S2)*

Step (S2) is a step of adding an organic acid to the polymer containing the polyalkylene carbonate prepared above and stirring.

The organic acid may be added in 0.001 parts by weight to less than 0.5 parts by weight on the basis of 100 parts by weight of the solid content of the polyalkylene carbonate in the polymer, and particular organic acids are as described above.

In addition, the stirring is a means for mixing the organic acid in the polymer so as to homogeneously distribute, and may be performed under conditions that are not significantly limited as long as this purpose may be achieved.

Meanwhile, prior to adding the organic acid, a step of additionally adding a solvent to the polymer may be further performed so that the solid content of the polyalkylene carbonate in the polymer becomes 10 wt% to 40 wt%, and in this case, the viscosity of the polymer may decrease, and the organic acid may be mixed in the polymer more homogeneously. In this case, the solvent may be the same as that used in step (S1), or may be at least one selected from the above-described solvents.

In addition, since the preparation method according to an embodiment of the present invention does not include additional processes such as extraction and precipitation for removing a catalyst component after the polymerization, the process is simple, and the cost for the additional process is reduced, resulting in improved economic efficiency and productivity.

*Step (S3)*

Step (S3) is a solvent removing step for removing the solvent to prepare the polyalkylene carbonate resin composition.

Here, the removal of the solvent may be performed by a common means in the art without specific limitation as long as the purpose of removing the solvent is achieved, and may be performed by, for example, applying heat at a temperature of 30°C to 150°C for 30 minutes to 10 hours.

## Examples

Hereinafter, the present invention will be explained in more detail through embodiments. However, the embodiments below are for illustrating the present invention, and the scope of the present invention is not limited thereby.

### Preparation Example

In a first beaker with a volume of 500 ml, 11.45 g of zinc chloride, 30 ml of distilled water and 39 g of cyclohexanol were mixed to prepare a first mixture solution. In a second beaker with a volume of 250 ml, 4 g of potassium hexacyanocobaltate was dissolved in 100 ml of distilled water to prepare a second mixture solution. In a third beaker with a volume of 100 ml, 5 g of polypropylene glycol (Mw = 3,000) and 23 g of cyclohexanol were dissolved in 2 ml of distilled water to prepare a third mixture solution. By using a mechanical stirrer, the second mixture solution was added dropwisely to the first mixture solution at 25°C for 1 hour, and the third mixture solution was injected at once, followed by reacting for 1 hour. Then, a mixture product was separated by using a high-speed centrifuge, and a precipitate separated was washed twice using a mixture of 70 ml of distilled water and 70 ml of cyclohexanol. Then, additional washing was performed using 140 ml of cyclohexanol, and the precipitate thus washed was dried in a vacuum oven of 80°C for 12 hours to finally obtained 6.2 g of a double metal cyanide catalyst.

### Example 1

To a high-pressure reactor, 10 mg of the double metal cyanide catalyst prepared in the Preparation Example, 20 g of ethylene oxide and 10 g of a dioxolane solvent were added. Then, carbon dioxide was injected into the reactor and a pressure of 30 bar was applied. Polymerization reaction was carried out at 70°C for 24 hours, and after finishing the reaction, unreacted carbon dioxide was removed to prepare a polymer containing polyalkylene carbonate. Then, the product was diluted in a dioxolane solvent so that the solid content of the polyalkylene carbonate in the polymer became 20 wt%, and 0.02 parts by weight of citric acid was added on the basis of 100 parts by weight of the solid content of the polyalkylene carbonate, followed by stirring. The resultant was poured on a tray, and drying was performed in a vacuum oven of 40°C for 6 hours to obtain a polyethylene carbonate resin composition. In this case, a catalyst component remaining in the composition was Co = 66 ppm and Zn = 150 ppm.

The contents of remaining Co and Zn were measured by ICP analysis under the conditions below.

0.1 g of the composition was aliquoted into a Teflon vessel and weighed, 2 ml of nitric acid and 1 ml of sulfuric acid were added thereto, and the lid was closed and sealed. After that, the composition was dissolved for 60 minutes at 220°C and 140 bar and for 30 minutes at 280°C and 130 bar using Multiwave 7000 (Anton Parr Co.), and cooled to room temperature. The residue was removed by a 0.45 μm PTFE filter, and the resultant was diluted in tertiary ultrapure water to prepare a sample for analysis.

ICP analysis was performed using Thermo scientific iCAP PRO (Theremo scientific Co.) under the conditions below.

RF Power: 1,200 W
Nebulizer gas flow: 0.7 L/min
Auxiliary gas flow: 0.5 L/min
Cool gas flow: 12 L/min
Pump speed: 50 rpm
Radial viewing height: 10.0 mm
Internal Standard: Sc

**Example 2**

A polyethylene carbonate resin composition was prepared by performing the same method as in Example 1 except for adding 0.05 parts by weight of citric acid on the basis of 100 parts by weight of the solid content of the polyalkylene carbonate in Example 1. In this case, the catalyst component remaining in the composition was the same level as in Example 1.

**Example 3**

A polyethylene carbonate resin composition was prepared by performing the same method as in Example 1 except for adding 0.1 parts by weight of citric acid on the basis of 100 parts by weight of the solid content of the polyalkylene carbonate in Example 1. In this case, the catalyst component remaining in the composition was the same level as in Example 1.

**Example 4**

A polyethylene carbonate resin composition was prepared by performing the same method as in Example 1 except for adding 0.3 parts by weight of citric acid on the basis of 100 parts by weight of the solid content of the polyalkylene carbonate in Example 1. In this case, the catalyst component remaining in the composition was the same level as in Example 1.

**Example 5**

A polyethylene carbonate resin composition was prepared by performing the same method as in Example 1 except for adding 0.01 parts by weight of tartaric acid instead of citric acid on the basis of 100 parts by weight of the solid content of the polyalkylene carbonate in Example 1. In this case, the catalyst component remaining in the composition was the same level as in Example 1.

**Example 6**

A polyethylene carbonate resin composition was prepared by performing the same method as in Example 1 except for adding 0.002 parts by weight of maleic acid instead of citric acid on the basis of 100 parts by weight of the solid content of the polyalkylene carbonate in Example 1. In this case, the catalyst component remaining in the composition was the same level as in Example 1.

**Example 7**

A polyethylene carbonate resin composition was prepared by performing the same method as in Example 1 except for adding 0.004 parts by weight of ascorbic acid instead of citric acid on the basis of 100 parts by weight of the solid content of the polyalkylene carbonate in Example 1. In this case, the catalyst component remaining in the composition was the same level as in Example 1.

**Comparative Example 1**

A polyethylene carbonate resin composition was prepared by performing the same method as in Example 1 except for not adding citric acid in Example 1. In this case, the catalyst component remaining in the composition was the same level as in Example 1.

**Comparative Example 2**

A polyethylene carbonate resin composition was prepared by performing the same method as in Example 1 except for adding 0.76 parts by weight of citric acid on the basis of 100 parts by weight of the solid content of the polyalkylene carbonate in Example 1. In this case, the catalyst component remaining in the composition was the same level as in Example 1.

**Comparative Example 3**

A polyethylene carbonate resin composition was prepared by performing the same method as in Example 1 except for adding 0.5 parts by weight of citric acid on the basis of 100 parts by weight of the solid content of the polyalkylene carbonate in Example 1. In this case, the catalyst component remaining in the composition was the same level as in Example 1.

**Comparative Example 4**

A polyethylene carbonate resin composition was prepared by performing the same method as in Example 6 except for adding 0.0005 parts by weight of maleic acid on the basis of 100 parts by weight of the solid content of the polyalkylene carbonate in Example 6. In this case, the catalyst component remaining in the composition was the same level as in Example 1.

**Comparative Example 5**

To a high-pressure reactor, 10 mg of the double metal cyanide catalyst prepared in the Preparation Example, 20 g of ethylene oxide and 10 g of a dioxolane solvent were added. Then, carbon dioxide was injected into the reactor and a pressure of 30 bar was applied. Polymerization reaction was carried out at 70°C for 24 hours, and after finishing the reaction, unreacted carbon dioxide was removed to prepare a polymer containing polyalkylene carbonate. Then, the product was diluted in a dioxolane solvent so that the solid content of the polyalkylene carbonate in the polymer became 20 wt%, and passed through a 0.2 μm filter to remove the catalyst. The resultant was poured on a tray, and drying was performed in a vacuum oven of 40°C for 6 hours to obtain a polyethylene carbonate resin composition. In this case, a catalyst component remaining in the composition was Co < 1 ppm and Zn < 2 ppm.

**Experimental Examples**

The molecular weight properties and thermal stability of the polyalkylene carbonate compositions prepared in the Examples and Comparative Examples were compared and analyzed. The results are shown in Table 1 below and FIG. 1.

(1) Molecular Weight Properties

The molecular weight properties were analyzed by gel permeation chromatography (GPC) using polystyrene as a standard material.

Column: two columns of Agilent PLgel MIXED-B (7.5 mm x 300, 10 μm)
Solvent: chloroform
Flow rate: 0.7 ml/min
Column temperature: 40°C
Sample: 4.0 mg/1.0 ml chloroform
Sample injection amount: 20 μl
Standard material: polystyrene

In addition, the molecular weight properties were measured before and after heat treatment of the polyalkylene carbonate compositions, and a molecular weight change ratio was also confirmed according to Mathematical Equation 2 below.

$$\text{Molecular weight change ratio (\%)} = (|Mw_1 - Mw_2|/Mw_1) \times 100 \qquad \text{[Mathematical Equation 2]}$$

In Mathematical Equation 2,

$Mw_1$ is the weight average molecular weight of the polyalkylene carbonate resin composition measured by gel chromatography before heat treatment, and $Mw_2$ is the weight average molecular weight of the polyalkylene carbonate resin composition measured by gel chromatography after heat treatment at 180°C for 20 minutes.

(2) Thermal Stability

The thermal stability was confirmed through mass change analysis using a thermogravimetric analyzer (TGA) and from a mass change ratio (mass loss ratio) of Mathematical Equation 1 below.

[Mathematical Equation 1]

$$\text{Mass change ratio (\%)} = (|W_1 - W_2| / W_1) \times 100$$

In Mathematical Equation 1,
$W_1$ is the mass of the polyalkylene carbonate resin composition at a point of 0 minutes in a 200°C isothermal step for 60 minutes in mass change analysis using a thermogravimetric analyzer, and $W_2$ is the mass of the polyalkylene carbonate resin composition at a point of 60 minutes in the 200°C isothermal step for 60 minutes.

Particularly, the mass change analysis was conducted using a thermogravimetric analyzer (TGA2, Mettler Toledo) according to the steps below.

1) First step: temperature increase from 30°C to 50°C (10°C/min)
2) Second step: isothermal at 150°C for 5 minutes
3) Third step: temperature increase from 150°C to 200°C (10°C/min)
4) Fourth step: isothermal at 200°C for 60 minutes

[Table 1]

| Division | | Example | | | | | | | Comparative Example | | | | |
|---|---|---|---|---|---|---|---|---|---|---|---|---|---|
| | | 1 | 2 | 3 | 4 | 5 | 6 | 7 | 1 | 2 | 3 | 4 | 5 |
| GPC (before heating) | Mw | 226000 | 234958 | 236122 | 225050 | 219000 | 203000 | 230000 | 235555 | 236712 | 248303 | 234566 | 234140 |
| | Mn | 102400 | 114908 | 115281 | 109807 | 97500 | 94100 | 104300 | 100400 | 114439 | 118490 | 116099 | 99062 |
| | PDI | 2.21 | 2.04 | 2.05 | 2.05 | 2.25 | 2.16 | 2.21 | 2.35 | 2.07 | 2.10 | 2.02 | 2.36 |
| GPC (after heating) | Mw | 105000 | 120423 | 124087 | 104988 | 114000 | 122000 | 142000 | 75769 | 90272 | 104762 | 91575 | 124413 |
| | Mn | 47000 | 59479 | 62965 | 49427 | 51800 | 53900 | 62400 | 40264 | 42374 | 54958 | 49780 | 64565 |
| | PDI | 2.23 | 2.02 | 1.97 | 2.12 | 2.20 | 2.26 | 2.28 | 1.88 | 2.13 | 1.91 | 1.84 | 1.93 |
| Molecular weight change ratio (%) | | 54 | 49 | 47 | 53 | 48 | 40 | 38 | 68 | 62 | 58 | 61 | 47 |
| Mass change ratio (%) | | 2 | 6 | 3 | 3 | 1 | 2 | 2 | 89 | 4 | 3 | 38 | 21.7 |
| Organic acid/Co+Zn weight ratio | | 0.93 | 2.31 | 4.63 | 13.99 | 0.46 | 0.09 | 0.19 | 0.00 | 35.19 | 23.15 | 0.02 | 0.00 |

As shown in Table 1 above, it was confirmed that the molecular weight change ratios were 55% or less, and the mass change ratios were 10% or less for the polyethylene carbonate resin compositions of Example 1 to Example 7, and decomposition by heat treatment was significantly reduced compared to the Comparative Examples.

Particularly, the molecular weight change ratios were reduced to a level of about 56% to 79% and the mass change ratios were reduced to a level of about 1% to 7%, and the molecular weight and mass changes due to heat treatment were significantly reduced for the polyethylene carbonate resin compositions of Example 1 to Example 7 compared to the polyethylene carbonate resin composition of Comparative Example 1 that did not include an organic acid, and through this, it was confirmed that by including the organic acid in the polyalkylene carbonate resin composition according to the present invention, the remaining catalyst component was deactivated and thermal decomposition by the catalyst component was suppressed, thereby markedly improving thermal stability.

In addition, in cases of Comparative Example 2 and Comparative Example 3, in which an organic acid was included but included excessively above the upper limit of a suitable range suggested in the present invention, and the weight ratio of the organic acid to the residual catalyst component was excessive, the molecular weight change ratios were 62% and 58%, and the suppressing effect of a polymer chain decomposition by heat was degraded. In a case of Comparative Example 4, which includes less organic acid below a lower limit of a suitable range, the molecular weight change ratio was 61%, and the mass change ratio was 38%, and thus, it was confirmed that the suppressing effect of thermal decomposition was insignificant. Through this, it was confirmed that if the organic acid is included but in a range deviated from the range suggested in the present invention, the thermal decomposition is rather accelerated, or the effect of catalyst deactivation is not obtained.

Also, in a case of the polyethylene carbonate resin composition of Comparative Example 5, prepared by including a catalyst removing step, though the catalyst component remaining in the composition was significantly reduced compared to the Examples, the mass change ratio was higher by about 4 times to 21 times compared to the Examples. Through this, it can be found that the polyalkylene carbonate resin composition including a specific amount of the organic acid according to the present invention has superior thermal stability through a more economical process.

## Claims

1. A polyalkylene carbonate resin composition comprising: polyalkylene carbonate; and an organic acid, wherein 0.001 parts by weight to less than 0.5 parts by weight of the organic acid is comprised on the basis of 100 parts by weight of the polyalkylene carbonate.

2. The polyalkylene carbonate resin composition according to claim 1, wherein
0.05 parts by weight to 0.1 parts by weight of the organic acid is comprised on the basis of 100 parts by weight of the polyalkylene carbonate.

3. The polyalkylene carbonate resin composition according to claim 1, wherein

   a metal element derived from a double metal cyanide compound is further comprised, and
   a weight ratio of the organic acid to the metal element (organic acid/metal element) is 0.05 to 23.00.

4. The polyalkylene carbonate resin composition according to claim 3, wherein
a weight ratio of the organic acid to the metal element (organic acid/metal element) is 0.05 to 14.00.

5. The polyalkylene carbonate resin composition according to claim 1, wherein
the organic acid is at least one selected from citric acid, tartaric acid, ascorbic acid and maleic acid.

6. The polyalkylene carbonate resin composition according to claim 3, wherein

   the double metal cyanide compound comprises a component derived from a metal cyanide complex and a component derived from a metal salt,
   the metal cyanide complex is represented by the following Formula 1, and
   the metal salt is represented by the following Formula 2:

   [Formula 1] $Y_aM'(CN)_b$

   in Formula 1,
   M' is at least one selected from the group consisting of Fe(II), Fe(III), Co(II), Co(III), Cr(II), Cr(III), Mn(II), Mn(III),

Ir(III), Ni(II), Rh(III), Ru(II), V(V) and V(IV),
Y is an alkali metal ion, or an alkaline earth metal ion,
a is an integer of 1 to 4, b is an integer of 4 to 6, and a and b values are selected so that the metal cyanide complex becomes electrically neutral,

[Formula 2] $M(X)_n$

in Formula 2,
M is at least one selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) and Cr(III),
X is one selected from the group consisting of a halide, a hydroxide, a sulfate, a carbonate, a cyanate, an oxalate, a thiocyanate, an isocyanate, an isothiocyanate, a carboxylate and a nitrate, and
n is a number satisfying the valence of M.

**7.** The polyalkylene carbonate resin composition according to claim 6, wherein the metal cyanide complex is potassium hexacyanocobaltate(III), potassium hexacyanoferrate(II), potassium hexacyanoferrate(III), calcium hexacyanocobaltate(III) or lithium hexacyanoiridate(III).

**8.** The polyalkylene carbonate resin composition according to claim 6, wherein the metal salt is at least one selected from the group consisting of zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II) thiocyanate, nickel(II) formate, and nickel(II) nitrate.

**9.** The polyalkylene carbonate resin composition according to claim 1, wherein

a mass change ratio defined by the following Mathematical Equation 1 is 10% or less:

[Mathematical Equation 1]

$$\text{Mass change ratio (\%)} = (|W_1 - W_2|/W_1) \times 100$$

in Mathematical Equation 1,
$W_1$ is a mass of the polyalkylene carbonate resin composition at a point of 0 minutes in a 200°C isothermal step for 60 minutes in a mass change analysis using a thermogravimetric analyzer, and $W_2$ is a mass of the polyalkylene carbonate resin composition at a point of 60 minutes in the 200°C isothermal step for 60 minutes.

**10.** The polyalkylene carbonate resin composition according to claim 1, wherein

a molecular weight change ratio defined by the following Mathematical Equation 2 is 55% or less:

$$\text{Molecular weight change ratio (\%)} = (|Mw_1 - Mw_2|/Mw_1) \times 100 \qquad \text{[Mathematical Equation 2]}$$

in Mathematical Equation 2,
$Mw_1$ is a weight average molecular weight of the polyalkylene carbonate resin composition measured by gel chromatography before heat treatment, and $Mw_2$ is a weight average molecular weight of the polyalkylene carbonate resin composition measured by gel chromatography after heat treatment at 180°C for 20 minutes.

**11.** The polyalkylene carbonate resin composition according to claim 1, wherein

the polyalkylene carbonate comprises a repeating unit represented by the following Formula 3 and a repeating unit represented by the following Formula 4:

[Formula 3]

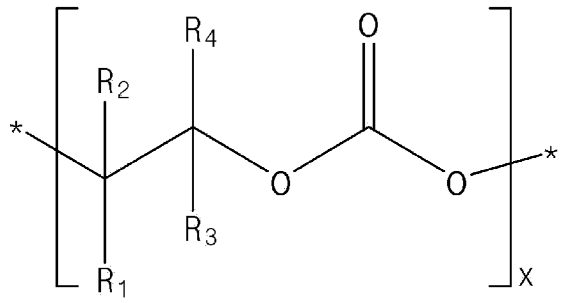

[Formula 4]

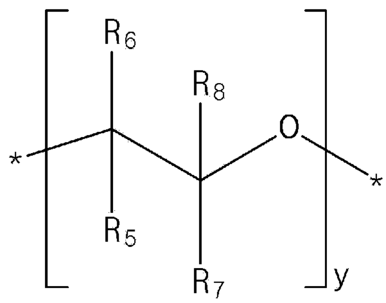

in Formula 3 and Formula 4,
$R_1$ to $R_8$ are each independently hydrogen, a linear alkyl group of 1 to 20 carbon atoms, a branched alkyl group of 3 to 20 carbon atoms, an aryl group of 6 to 20 carbon atoms, an alkenyl group of 2 to 20 carbon atoms, or a cycloalkyl group of 3 to 20 carbon atoms,
* means a connecting part between repeating units, and x and y are mole fractions, where x is 0.70 to 1.00, y is 0.00 to 0.30, and x+y is 1.

**12.** The polyalkylene carbonate resin composition according to claim 1, wherein the polyalkylene carbonate has a glass transition temperature of -10°C to 50°C.

**13.** The polyalkylene carbonate resin composition according to claim 1, wherein the polyalkylene carbonate is at least one selected from the group consisting of polyethylene carbonate, polypropylene carbonate, polypentene carbonate, polyhexene carbonate, polyoctene carbonate and polycyclohexene carbonate.

**14.** The polyalkylene carbonate resin composition according to claim 1, wherein the polyalkylene carbonate has the cyclic carbonate content of 0.5 wt% to 15 wt%.

**15.** A method for preparing a polyalkylene carbonate resin composition, the method comprising:

a step of polymerizing an alkylene oxide compound and carbon dioxide in the presence of a catalyst in a solvent to prepare a polymer comprising polyalkylene carbonate;
a step of adding an organic acid to the polymer and stirring; and
a step of removing the solvent, wherein
0.001 parts by weight to less than 0.5 parts by weight of the organic acid is added on the basis of 100 parts by weight of the solid content of the polyalkylene carbonate in the polymer.

**16.** The method for preparing a polyalkylene carbonate resin composition according to claim 15, wherein the catalyst comprises a double metal cyanide compound and a complexing agent.

**17.** The method for preparing a polyalkylene carbonate resin composition according to claim 15, wherein

a solvent is additionally added to the polymer so that the solid content of the polyalkylene carbonate in the polymer before adding the organic acid becomes 10 wt% to 40 wt%.

**18.** The method for preparing a polyalkylene carbonate resin composition according to claim 15, wherein the polymerization is performed in a temperature range of 30°C to 120°C.

**19.** The method for preparing a polyalkylene carbonate resin composition according to claim 15, wherein the complexing agent is at least one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-mehtyl cycloheptanol and 4-methy cycloheptanol.

[FIG. 1]

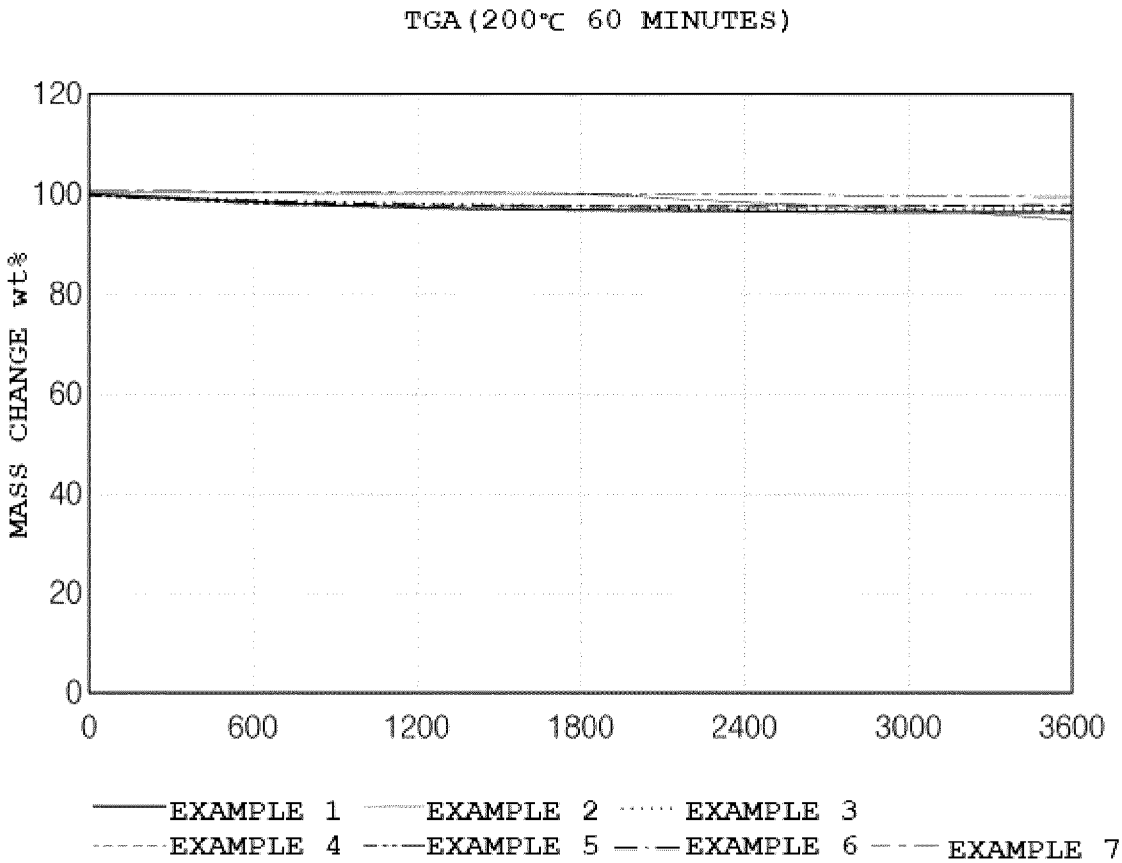
TGA(200℃ 60 MINUTES)
MASS CHANGE wt%
120
100
80
60
40
20
0
0
600
1200
1800
2400
3000
3600
EXAMPLE 1
EXAMPLE 2
EXAMPLE 3
EXAMPLE 4
EXAMPLE 5
EXAMPLE 6
EXAMPLE 7

[FIG. 2]

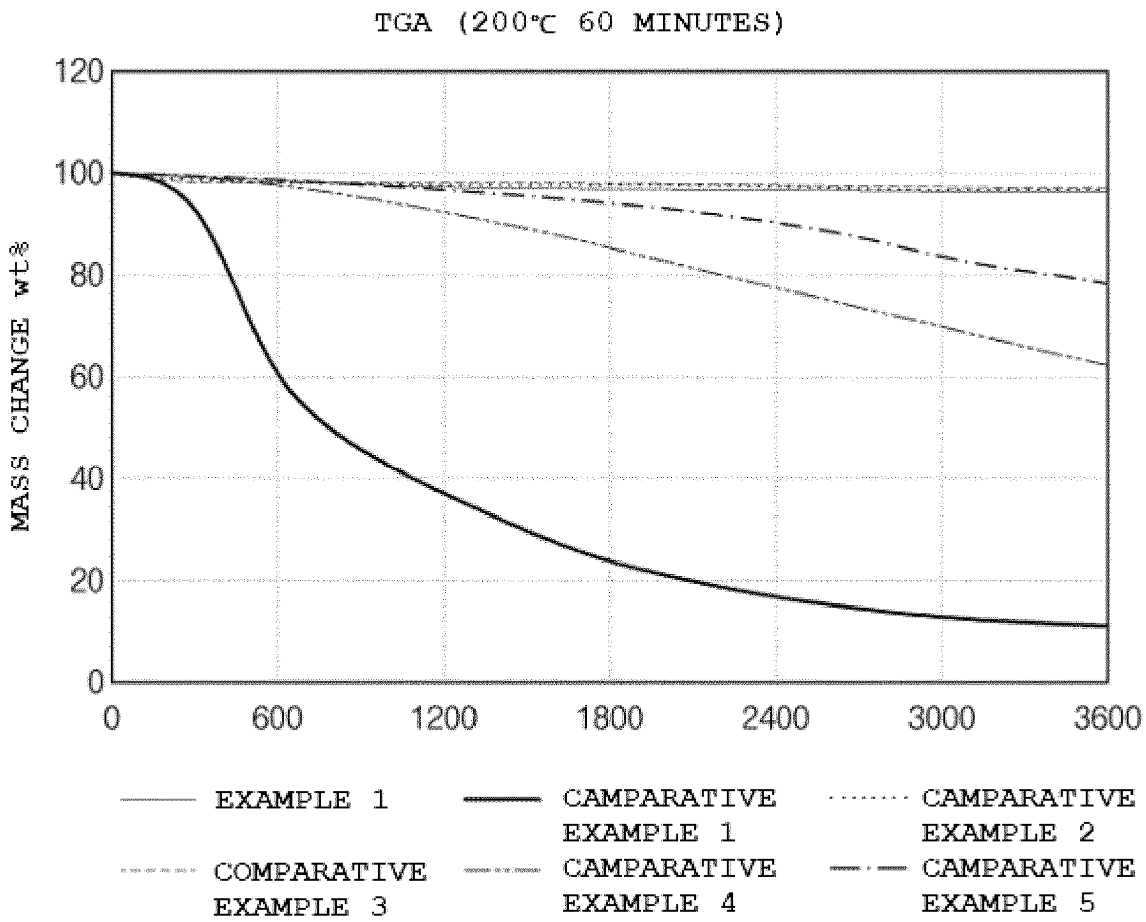
TGA (200℃ 60 MINUTES)
MASS CHANGE wt%
120
100
80
60
40
20
0
0
600
1200
1800
2400
3000
3600
EXAMPLE 1
CAMPARATIVE EXAMPLE 1
CAMPARATIVE EXAMPLE 2
COMPARATIVE EXAMPLE 3
CAMPARATIVE EXAMPLE 4
CAMPARATIVE EXAMPLE 5

**INTERNATIONAL SEARCH REPORT**

International application No.
**PCT/KR2024/001728**

**A. CLASSIFICATION OF SUBJECT MATTER**

**C08K 5/09**(2006.01)i; **C08K 5/092**(2006.01)i; **C08L 69/00**(2006.01)i; **C08G 64/42**(2006.01)i; **C08G 64/34**(2006.01)i; **C08G 65/26**(2006.01)i

According to International Patent Classification (IPC) or to both national classification and IPC

**B. FIELDS SEARCHED**

Minimum documentation searched (classification system followed by classification symbols)

C08K 5/09(2006.01); B01J 31/12(2006.01); B01J 31/22(2006.01); B29B 9/06(2006.01); C08G 64/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리알킬렌카보네이트(polyalkylene carbonate), 이중금속 시아나이드 촉매(double metal cyanide catalyst), 유기산(organic acid), 촉매 잔류물(catalyst residue), 촉매 비활성화(catalyst deactivation), 열안정성(thermal stability)

**C. DOCUMENTS CONSIDERED TO BE RELEVANT**

| Category* | Citation of document, with indication, where appropriate, of the relevant passages | Relevant to claim No. |
|---|---|---|
| | BARRETO, C. et al. Novel solventless purification of poly(propylene carbonate): Tailoring the composition and thermal properties of PPC. Polymer degradation and stability. 2012, vol. 97, no. 6, pp. 893-904. | |
| X | See pages 893-903; table 2; and figures 1-6. | 1-2,9-15,17-18 |
| Y | | 3-8,16,19 |
| Y | KR 10-2220786 B1 (SK INNOVATION CO., LTD. et al.) 02 March 2021 (2021-03-02)<br>See abstract; and claims 5-8. | 3-8 |
| Y | WU, L.-C. et al. DMC catalyzed epoxide polymerization: Induction period, kinetics, and mechanism. Journal of applied polymer science. 2004, vol. 92, no. 2, pp. 1302-1309.<br>See abstract; page 1307, right column; and figure 9. | 16,19 |
| A | ALMORA-BARRIOS, N. et al. Structure, activity, and deactivation mechanisms in double metal cyanide catalysts for the production of polyols. ChemCatChem. 2015, vol. 7, no. 6, pp. 928-935.<br>See entire document. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2024** | **10 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/001728**

**C. DOCUMENTS CONSIDERED TO BE RELEVANT**

| Category* | Citation of document, with indication, where appropriate, of the relevant passages | Relevant to claim No. |
|---|---|---|
| A | KR 10-2067687 B1 (LG CHEM, LTD.) 11 February 2020 (2020-02-11)<br>See entire document. | 1-19 |

Form PCT/ISA/210 (second sheet) (July 2022)

**INTERNATIONAL SEARCH REPORT**
**Information on patent family members**

International application No.
**PCT/KR2024/001728**

| Patent document cited in search report | Publication date (day/month/year) | Patent family member(s) | Publication date (day/month/year) |
|---|---|---|---|
| KR 10-2220786 B1 | 02 March 2021 | CN 105555400 A | 04 May 2016 |
| | | CN 105555400 B | 04 January 2019 |
| | | KR 10-2015-0010602 A | 28 January 2015 |
| | | US 2016-0343566 A1 | 24 November 2016 |
| | | US 2018-0079765 A1 | 22 March 2018 |
| | | WO 2015-009013 A1 | 22 January 2015 |
| KR 10-2067687 B1 | 11 February 2020 | CN 108350164 A | 31 July 2018 |
| | | CN 108350164 B | 11 September 2020 |
| | | EP 3348596 A1 | 18 July 2018 |
| | | EP 3348596 A4 | 19 December 2018 |
| | | EP 3348596 A8 | 05 September 2018 |
| | | EP 3348596 B1 | 21 August 2019 |
| | | JP 2018-531314 A | 25 October 2018 |
| | | JP 6616894 B2 | 04 December 2019 |
| | | KR 10-2017-0106220 A | 20 September 2017 |
| | | US 10829635 B2 | 10 November 2020 |
| | | US 2018-0305542 A1 | 25 October 2018 |
| | | WO 2017-155306 A1 | 14 September 2017 |
| | | WO 2017-155306 A8 | 09 November 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230015651
- KR 1020230082943
- KR 1020230082944
- CN 103842406 B